**Europäisches Patentamt**

**European Patent Office**

**Office européen des brevets**

(11) Veröffentlichungsnummer: **0 180 117**
A2

(12) # EUROPÄISCHE PATENTANMELDUNG

(21) Anmeldenummer: **85113289.4**

(22) Anmeldetag: **19.10.85**

(51) Int. Cl.⁴: **G 01 N 27/00**

(30) Priorität: **20.10.84 DE 3438546**

(71) Anmelder: **Kernforschungsanlage Jülich Gesellschaft mit beschränkter Haftung, Postfach 1913, D-5170 Jülich 1 (DE)**

(43) Veröffentlichungstag der Anmeldung: **07.05.86**
**Patentblatt 86/19**

(84) Benannte Vertragsstaaten: **AT BE CH FR GB IT LI LU NL SE**

(72) Erfinder: **Besocke, Karl-Heinz, Tuchbleiche 8, D-5170 Jülich (DE)**

(54) **Verfahren zum Nachweis eines Stoffes oder zum Nachweis zumindest einer Komponente eines Stoffgemisches sowie Schwingkondensator zur Durchführung des Verfahrens.**

(57) Zum Nachweis eines Stoffes oder einer Komponente eines Stoffgemisches wird die Elektronenaustrittsarbeit eines Sensormaterials gemessen, dessen Elektronenaustrittsarbeit sich bei Adsorption von Atomen oder Molekülen des Stoffes oder der Komponente des Stoffgemisches auf der Oberfläche des Sensormaterials verändert. Als Meßfühler wird ein zur Messung von Elektronenaustrittsarbeit aus Oberflächen geeigneter Schwingkondensator eingesetzt, beispielsweise ein als Kelvinsonde bekannter Schwingkondensator.

-1-

0180117

Verfahren zum Nachweis eines Stoffes oder zum Nachweis
zumindest einer Komponente eines Stoffgemisches sowie
Schwingkondensator zur Durchführung des Verfahrens

---

Die Erfindung bezieht sich auf ein Verfahren zum Nachweis
eines Stoffes oder zum Nachweis zumindest einer Komponente
eines Stoffgemisches. Gegenstand der Erfindung ist zur
Durchführung des Verfahrens auch ein Schwingkondensator,
der zur Messung von Elektronenaustrittsarbeit aus Oberflächen oder Grenzflächen geeignet ist,

Der Nachweis von Stoffen oder Stoffkomponenten insbesondere in Gasgemischen bereitet vor allem dann Schwierigkeiten, wenn die Stoffe oder Stoffkomponenten in geringer
Konzentration im Gasgemisch vorliegen. Gassensoren bekannter Art beruhen auf dem Prinzip der Messung optischer
Konstanten, der Messung chemischer Reaktionen, der Gaschromatografie oder der Messung der Leitfähigkeitsänderung,
vergleiche beispielsweise G. Heiland, "Sensors and Actuators",
Vol. 2, Seiten 343-361, 1982. Bei diesen Methoden wird
jedoch die erforderliche Selektivität, die Empfindlichkeit
und Genauigkeit sowie die Stablilität der Anzeige über
lange Betriebszeiten hinweg nur unzureichend erfüllt.

Aufgabe der Erfindung ist es, ein Verfahren anzugeben,
das die vorgenannten Anforderungen hinsichtlich Selektivität
und Sensibilität beim Nachweis von Stoffen mit geringem
Aufwand optimaler erfüllt.

- 2 -

Die Erfindung geht davon aus, daß die Stoffe oder Stoffkomponenten eines Gas- oder auch Flüssigkeitsgemisches mit der Oberfläche eines Sensors reagieren können und daß die hierdurch hervorgerufene Veränderung durch Adsorption von Atomen und Molekülen auf der Oberfläche eine Änderung des elektronischen Zustandes bewirkt, die eine Änderung der Elektronenaustrittsarbeit der Oberfläche zur Folge hat. Diese Änderung der Elektronenaustrittsarbeit ist meßbar. Gemäß der Erfindung wird somit die Aufgabe dadurch gelöst, daß zum Nachweis des Stoffes oder von Komponenten des Stoffgemisches die Elektronenaustrittsarbeit an einem Sensormaterial gemessen wird, dessen Elektronenaustrittsarbeit sich bei Adsorption von Atomen oder Molekülen des zu bestimmenden Stoffes oder der Komponente des Stoffgemisches auf der Oberfläche des Sensormaterials ändert. Das Sensormaterial ist selektiv in der Weise wählbar, daß nur eine bestimmte Atom- bzw. Molekülgruppe eine Änderung der Elektronenaustrittsarbeit hervorruft und somit eine spezifische Empfindlichkeit für einen Stoff oder eine Stoffkomponente eines Gas- oder Flüssigkeitsgemisches besteht und eine meßbare Änderung der Elektronenaustrittsarbeit verursacht. Diesem Prinzip folgend können Stoffe in Gas- oder Flüssigkeitsgemischen analysiert aber auch Feuchtegrade gemessen werden.

In weiterer Ausbildung der Erfindung ist vorgesehen, die Elektronenaustrittsarbeit durch Messung des Kontaktpotentials zwischen zwei sich relativ zueinander bewegenden Elektroden zu messen, von denen zumindest eine der Elektroden mit Sensormaterial belegt ist.                    Für die Messung der Elektronenaustrittsarbeit läßt sich dann die Veränderung des Kontaktpotentials zwischen beiden Elektroden nach dem Schwingkonsendatorverfahren bestimmen.

- 3 -

- 3 -

Die Genauigkeit der Meßwerte läßt sich durch Zwangsführung des Stoffes oder Stoffgemisches zur Oberfläche des Sensormaterials optimieren. Um die Sensibilität und Selektivität zu verbessern, wird das Sensormaterial auf eine vorgegebene Temperatur eingestellt. Es kann auch zweckmäßig sein, das Sensormaterial zu erwärmen oder zu kühlen, damit es während der Adsorptionsphase zum Nachweis von Stoffen einen Temperaturbereich durchläuft. Der Temperaturverlauf kann mit Hilfe eines Ablaufprogramms gesteuert sein. Einen vorgegebenen Temperaturbereich zu druchlaufen, erhöht die Genauigkeit und Selektivität der Analyse für solche Stoffe oder Stoffkomponenten, die die Elektronenaustrittsarbeit innerhalb des Temperaturbereiches extrem beeinflussen.

Als Meßinstrument zur Durchführung des Verfahrens ist ein Schwingkondensator mit relativ zueinander beweglichen Elektroden geeignet. Eine der Elektroden weist das mit dem Stoff oder einer der Komponenten des Stoffgemisches reagierende Sensormaterial auf. Schwingkondensatoren dieser Art werden in DE-PS 2.613.528 und DT-OS 3.034.390 beschrieben.

Nachfolgend wird das erfindungsgemäße Verfahren und ein Schwingkondensator zur Durchführung des Verfahrens, der ebenfalls Gegenstand der Erfindung ist, näher beschrieben. Die Zeichnung zeigt im einzelnen:

- 4 -

- 4 -                    0180117

Figur 1        Schwingkondensator mit Antriebseinheit
Figur 2        Verschiedene Elektrodenausbildungen
               mit Sensormaterialien
Figur 3        Reaktion eines Sensors auf $NH_3$
               in Luft.

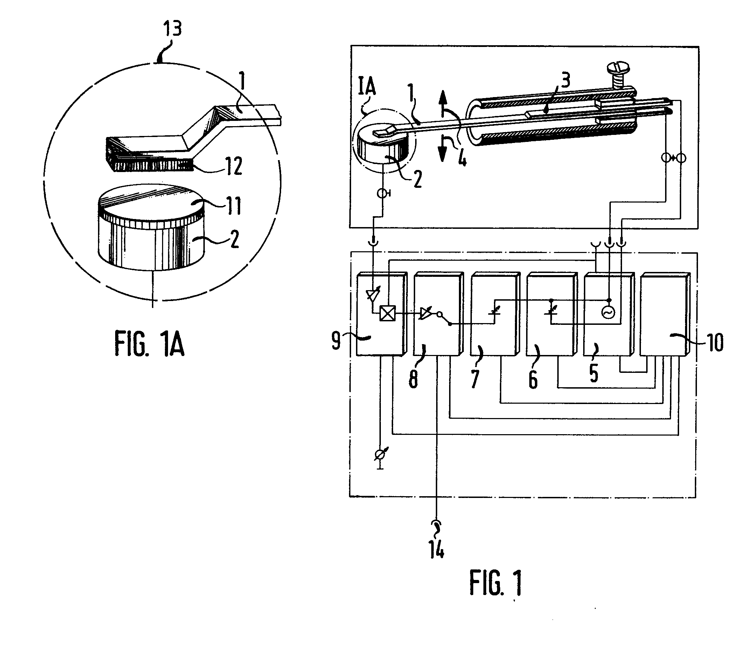

Figur 1 zeigt einen Schwingkondensator, wie er als
Kelvin-Sonde bekannt ist. Bei diesem Schwingkondensator werden die Bewegungen einer schwingenden Elektrode 1 gegenüber einer ortsfest angeordneten Elektrode 2 über eine Piezokeramik 3 angeregt. Die
Schwingrichtung 4 der Eelektrode 1 relativ zur Oberfläche der ortsfesten Elektrode 2 ist in Figur 1
durch eingetragene Pfeile kenntlich gemacht. Für
den Antrieb der Piezokeramik sorgt ein Oszillator 5,
der von einem Regelkreis 6 überlagert wird. Das Meßsignal läuft über einen stromempfindlichen lock-in-
Verstärker 9, einen Integrator 8 und eine Kompensationsspannungsquelle 7. Alle elektrischen Teile
werden von einer Stromversorgung 10 mit Antriebsenergie versorgt. Mit dem Regelkreis 6 läßt sich
der mittlere Elektrodenabstand zwischen schwingender Elektrode 1 und ortsfester Elektrode 2 einstellen.
Hierzu wird mittels des Regelkreises 6 der vom Oszillator 5 erzeugten Wechselspannung, die die schwingende Elektrode 1 erregt, eine Gleichspannung überlagert.

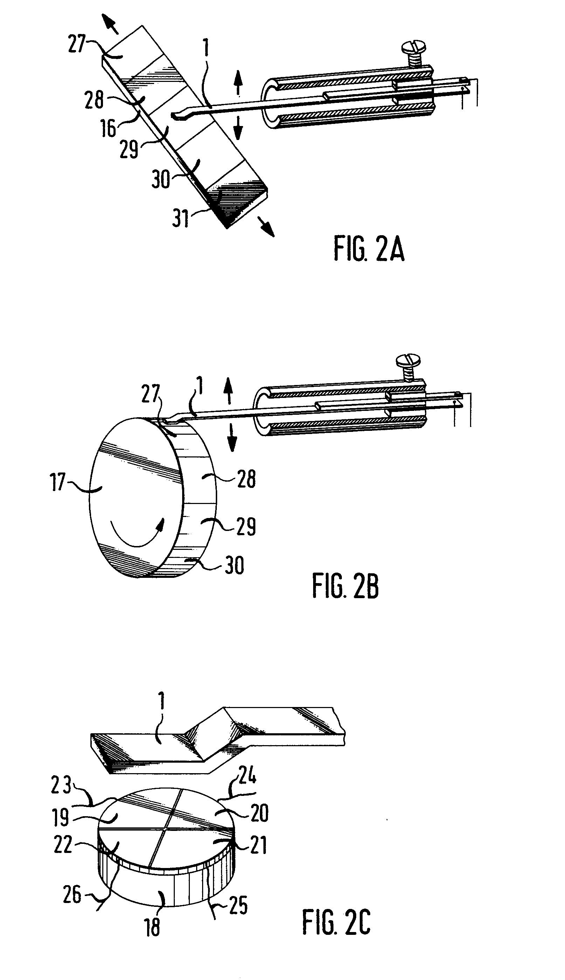

In einem die Elektroden 1 und 2 vergrößernden Ausschnitt, Figur 1a, sind die schwingende und die ortsfeste Elektrode dargestellt, die mit Sensormaterial belegt sind. Im Ausführungsbeispiel nach Figur 1 wurde an der ortsfesten Elektrode ein Sensormaterial 11, an der schwingenden Elektrode ein anderes Sensormaterial 12 angebracht. Dies dient zur Erhöhung der Selektivität der Messung und zur Verstärkung der Empfindlichkeit, mit der der Schwingkondensator auf Stoffe oder Komponenten eines Stoffgemisches reagiert, die in eine den Schwingkondensator umgebende Meßkammer 13 eingeleitet werden. Auf die Belegung der Elektroden mit Sensormaterial wird im Zusammenhang mit in Fig. 2 wiedergegebenen Ausführungsbeispielen noch näher eingegangen werden.

Ein piezoelektrischer Antrieb ist für den Schwingkondensator nicht erforderlich. Der Antrieb kann auch elektromagnetisch oder in irgendeiner anderen Weise erfolgen.

Die Meßkammer 13 kann den Betriebsbedingungen beliebig angepaßt werden. Sie kann auch für Mikrovolumina von < 1 mm$^3$ ausgelegt werden. Das zu untersuchende Medium kann den Meßraum frei oder unter Zwang durchströmen, um eine kontinuierliche Messung zu erleichtern. Bei Zwangsdurchströmung ist eine Einrichtung zur Messung des Stoffstroms vorgesehen. Die Einrichtung kann beispielsweise im Zulauf des Gas- oder Flüssigkeitsgemisches zur Meßkammer angeordnet sein.

Das Meßsignal kann im allgemeinen von der ortsfesten Elektrode abgegriffen und mittels eines elektronischen Meßverstärkers weiter verarbeitet, zur Anzeige gebracht beziehungsweise zu Regelzwecken herangezogen werden. Hierzu befindet sich im Ausführungsbeispiel nach Figur 1 am Ausgang des Integrators 8 ein Anschluß 14 für ein Anzeigegerät oder für eine nachfolgende Datenerfassung und -verarbeitung.

Die Sensormaterialien 11, 12 können entweder massiv als Elektrodenteil ausgebildet sein oder als Folie oder als eine dünne Beschichtung auf den Elektroden 1, 2 aufgebracht sein. Zumindest eine der Elektroden 1, 2 muß als Sensor wirken, der spezifisch auf eine Gas- bzw. Flüssigkeitskomponente anspricht. Die andere der Elektroden kann dann beispielsweise aus einem chemisch stabilen Material (Referenzmaterial) bestehen, daß sich durch das zu untersuchende Medium nicht ändert. Zur Erhöhung der Selektivität und der Empfindlichkeit kann auch die zweite Elektrode mit einem auf den gleichen Stoff reagierenden anderen Sensormaterial versehen werden. Um verschiedene Gas- bzw. Flüssigkeitskomponenten zu ermitteln, sind in Figur 2 ortsfeste Elektroden 16, 17, 18 wiedergegeben, die in mehrere Teilelektroden unterteilt sind, von denen jede der Teilelektroden mit unterschiedlichem Sensormaterial belegt ist, auf das spezifisch jeweils eine andere Komponente einwirkt. Diese Unterteilung der Elektroden kann auf verschiedene Weise geschehen. In Figur 2 ist eine als Sensorschlitten ausgebildete Elektrode 16, eine als rotierbarer Sensorrevolver ausgebildete Elektrode 17 und eine ortsfeste Elektrode 18 dargestellt, die mehrere, mit verschiedenen Sensormaterialien belegte Flächen 19 bis 22 aufweist. An jede der Flächen ist jeweils eine Meßleitungszuführung 23 bis 26 angeschlossen, so daß die Elektronenaustrittsarbeit jeder Fläche bei Bewegung der schwingenden Elektrode 1, die alle Flächen 19 - 22 zugleich überdeckt, gesondert gemessen werden kann. Die mittels der Sensormaterialien bestimmbaren verschiedenen Stoffkomponenten des mit der ortsfesten Elektrode in Kontakt gebrachten Stoffgemisches sind somit simultan nachweisbar. Mit Hilfe einer Datenverarbeitungsanlage, die die Meßwerte auswertet, kann eine detaillierte Analyse des Gasgemisches und der Stoffkomponenten erfolgen.

Dagegen sind der mit Sensormaterialien 27 - 31 belegte Sensorschlitten, Fig. 2a, oder der rotierbare Sensorrevolver, Fig. 2b, nur nacheinander zum Nachweis einer spezifischen Stoffkomponente einsetzbar. Es läßt sich jeweils eines der Sensormaterialien zur Messung der Elektronenaustrittsarbeit unter die schwingende Elektrode 1 bewegen. Die Messungen pro Stoff oder Stoffkomponente erfolgen somit getrennt von einander.

Um die Sensormaterialien zu regenerieren oder auch um die Selektivität zu steuern, ist es möglich, die Sensormaterialien zu temperieren. Hierzu dienen in der Zeichnung nicht wiedergegebene Heizvorrichtungen, zum Beispiel eine Heizung mit elektrischer Heizwendel innerhalb oder außerhalb der Meßkammer 13 oder eine entsprechende Kühlvorrichtung.

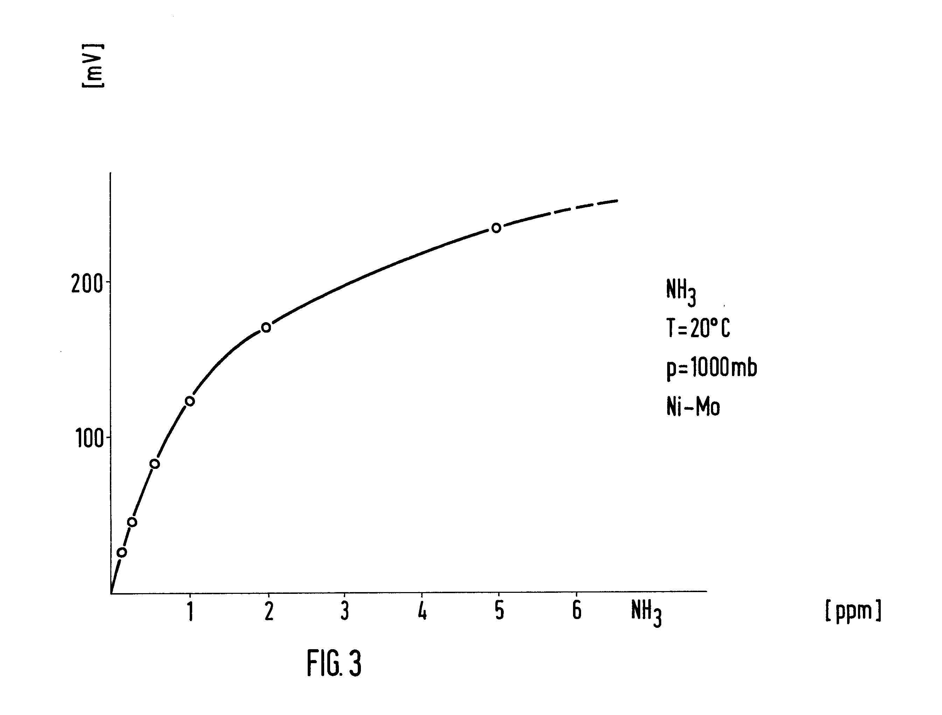

Figur 3 zeigt ein Anwendungsbeispiel, das mit einer in Figur 1 dargestellten Einrichtung gemessen wurde. Es wird das Kontaktpotential in Millivolt (mV) in Abhängigkeit von der Konzentration von Ammoniak $NH_3$ in Luft in ppm angegeben. Gemessen wurde mit Nickel und Molybdän als Sensormaterial, wobei im Ausführungsbeispiel für die ortsfeste Elektrode 2 Nickel und für die schwingende Elektrode 1 Molybdän eingesetzt wurde. Für die Stoffanalyse kommt es jedoch nicht darauf an, welches dieser Sensormaterialien an ortsfester oder schwingender Elektrode befestigt ist, es ist vielmehr die Sensormaterialpaarung für die zu messende Kontaktpotentialdifferenz entscheidend.

In Figur 3 sind auf der Abszisse die $NH_3$-Konzentration in ppm, auf der Ordinate die Kontaktpotentialdifferenz in mV aufgetragen. In einer mit Luft gefüllten Kammer wurde bei einem Gesamtdruck von 1000 mb und einer Temperatur von zk. $20^{o}$C die Konzentration von Ammoniak schrittweise erhöht. Der in der Kammer vorhandene Schwingkondensator reagierte auf die ansteigende Ammoniakkonzentration. Mit steigender Ammoniakkonzentration erhöhten sich die gemessenen Kontaktpotentialwerte. Dabei ergab sich im Bereich geringer Ammoniakkonzentration eine stärkere Änderung des Kontaktpotentials als im Bereich höherer Ammoniakkonzentration. Es sind somit sehr geringe Stoffkonzentrationen mit hoher Empfindlichkeit nachweisbar.

Aus der Literatur sind eine Vielzahl von Sensormaterialien für unterschiedliche Stoffe bekannt, deren Änderung der Elektronenaustrittsarbeit bzw. deren Änderung des Oberflächenpotentials für eine Analyse der Stoffe ausgenutzt werden kann. Es ist auch bekannt, daß die Empfindlichkeit der Sonsormaterialien für verschiedene Stoffkomponenten stark temperaturabhängig ist, vgl. die bereits angeführte Veröffentlichung von G. Heiland in "Sensors and Actuators" vol. 2, 1982, S. 353. Dies kann zur Selektion einzelner Stoffkomponenten eines Stoffgemisches mit einem Sensormaterial dadurch genutzt werden, daß das Sensormaterial einen vorgegebenen Temperaturbereich durchläuft, der so gewählt ist, daß die zu ermittelnden Stoffkomponenten innerhalb dieses Bereiches charakteristische Parameter, beispielsweise Extremwerte aufweisen, vgl. die vorgenannte Veröffentlichung von G. Heiland, dort Fig. 11. Es können somit auch mit einem einzigen Sensormaterial verschiedene Stoffe analysiert werden.

0180117

Kernforschungsanlage Jülich
Gesellschaft mit beschränkter Haftung


P a t e n t a n s p r ü c h e


1. Verfahren zum Nachweis eines Stoffes oder
zum Nachweis zumindest einer der Komponenten
eines Stoffgemisches,
g e k e n n z e i c h n e t  d u r c h
Messung der Elektronenaustrittsarbeit eines
Sensormaterials, dessen Elektronenaustrittsarbeit
sich bei Adsorption von Atomen oder Molekülen
des Stoffes oder bei Atomen oder Molekülen
der Komponente des Stoffgemisches auf der
Oberfläche des Sensormaterials ändert.

2. Verfahren nach Anspruch 1,
d a d u r c h  g e k e n n z e i c h n e t ,
daß die Elektronenaustrittsarbeit durch Messung
des Kontaktpotentials zwischen zwei sich relativ
zueinander bewegenden Elektroden gemessen
wird, von denen zumindest eine der Elektroden
mit Sensormaterial belegt ist.

3. Verfahren nach Anspruch 1 oder 2,
d a d u r c h  g e k e n n z e i c h n e t ,
daß der Stoff oder das Stoffgemisch zur Oberfläche des Sensormaterials in kontrollierbarer
Weise zwangsgeführt wird.

4. Verfahren nach Anspruch 1, 2 oder 3,
d a d u r c h  g e k e n n z e i c h n e t ,
daß das Sensormaterial auf eine vorgegebene
Temperatur eingestellt wird.

5. Verwendung eines zur Messung von Elektronenaustrittsarbeit geeigneten Schwingkondensators zum Nachweis eines Stoffes oder zum Nachweis zumindest einer Komponente eines Stoffgemisches, wobei zumindest eine der Elektroden des Schwingkondensators ein Sensormaterial aufweist, dessen Elektronenaustrittsarbeit sich bei Adsorption von Atomen oder Molekülen des Stoffes oder bei Atomen oder Molekülen der Komponente des Stoffgemisches auf der Oberfläche des Sensormaterials ändert.

6. Schwingkondensator, der zur Messung von Elektronenaustrittsarbeit aus Oberflächen oder Grenzflächen geeignet ist, mit zwei relativ zueinander bewegbaren Elektroden zur Durchführung des Verfahrens nach Patentansprüchen 1 bis 4, d a d u r c h   g e k e n n z e i c h n e t , daß zumindest eine der Elektroden des Schwingkondensators ein Sensormaterial aufweist, dessen Elektronenaustrittsarbeit sich bei Adsorption von Atomen oder Molekülen des Stoffes oder bei Atomen oder Molekülen der Komponente des Stoffgemisches auf der Oberfläche des Sensormaterials ändert.

7. Schwingkondensator nach Anspruch 6, d a d u r c h   g e k e n n z e i c h n e t , daß beide Elektroden des Schwingkondensators Sensormaterial aufweisen, wobei sich das Sensormaterial der einen Elektrode vom Sensormaterial der anderen Elektrode unterscheidet.

- 12 -

8. Schwingkondensator nach Anspruch 6 oder 7,
d a d u r c h   g e k e n n z e i c h n e t ,
daß das Sensormaterial auf ein Gas oder eine
Gaskomponente reagiert.

9. Schwingkondensator nach Anspruch 6 oder 7,
d a d u r c h   g e k e n n z e i c h n e t ,
daß das Sensormaterial auf eine Flüssigkeit
oder eine Flüssigkeitskomponente reagiert.

10. Schwingkondensator nach einem der Ansprüche
6 bis 9,
d a d u r c h   g e k e n n z e i c h n e t ,
daß das Sensormaterial als Belag auf der Elektrode
aufgebracht ist.

11. Schwingkondensator nach einem der Ansprüche
6 bis 10
d a d u r c h   g e k e n n z e i c h n e t ,
daß zumindest eine der Elektroden aus mehreren
Teilelektroden besteht, von denen jede der
Teilelektroden mit unterschiedlichem Sensormaterial belegt ist.

12. Schwingkondensator nach Anspruch 11,
d a d u r c h   g e k e n n z e i c h n e t ,
daß die Elektronenaustrittsarbeit jedes Sensormaterials jeweils gesondert meßbar ist.

13. Schwingkondensator nach Anspruch 11 oder 12,
d a d u r c h   g e k e n n z e i c h n e t ,
daß die Teilelektroden wechselweise benutzbar
sind.

14. Schwingkondensator nach einem der Ansprüche
6 bis 13,
d a d u r c h   g e k e n n z e i c h n e t ,
daß die Elektroden in einer vom Stoff oder
Stoffgemisch frei durchströmbaren Meßkammer
angeordnet sind.

15. Schwingkondensator nach Anspruch 14,
d a d u r c h   g e k e n n z e i c h n e t ,
daß die Meßkammer eine Zwangsführung für den
Stoffstrom aufweist.

16. Schwingkondensator nach Anspruch 15,
d a d u r c h   g e k e n n z e i c h n e t ,
daß eine den Stoffstrom messende Einrichtung
vorgesehen ist.

17. Schwingkondensator nach einem der Ansprüche
6 bis 16,
d a d u r c h   g e k e n n z e i c h n e t ,
daß die Temperatur des Sensormaterials einstellbar
ist.

18. Schwingkondensator nach einem der Ansprüche
6 bis 17,
d a d u r c h   g e k e n n z e i c h n e t ,
daß die Meßkammer ein zur Untersuchung von
Mikrovolumina geeignetes Raumvolumen aufweist.

19. Schwingkondensator nach einem der vorhergehenden
Ansprüche 6 bis 18,
d a d u r c h   g e k e n n z e i c h n e t ,

- 14 -

daß die gegen die andere bewegbare Elektrode
oder beide Elektroden durch ein piezoelektrisches
Schwingelement angetrieben werden.

20. Schwingkondensator nach einem der Ansprüche
6 bis 18,
d a d u r c h   g e k e n n z e i c h n e t ,
daß der Bewegungsantrieb der Elektroden elektromagnetisch erfolgt.

FIG. 1A

FIG. 1

FIG. 2A

FIG. 2B

FIG. 2C

FIG. 3